# EUROPÄISCHE PATENTANMELDUNG

(11) **EP 0 706 868 A1**
(43) Veröffentlichungstag der Anmeldung: **17.04.1996**
(21) Anmeldenummer: 95115895.5
(22) Anmeldetag: 09.10.1995
(51) Int. Cl.: B28B 17/00, G01B 11/24, G05D 5/06

(54) **Verfahren und Vorrichtung zur Qualitätsprüfung von Formteilen**

(30) Priorität: 10.10.1994 DE 9416307 U; 31.03.1995 DE 19512188
(71) Anmelder: LAEIS + BUCHER GmbH, D-54290 Trier (DE)
(72) Erfinder: Konder, Wolfgang, D-54293 Trier (DE); Wollscheid, Heinz-Peter, D-54317 Gusterath (DE)
(74) Vertreter: Patentanwälte Leinweber & Zimmermann

(57) **Zusammenfassung**

Ein Verfahren und eine Vorrichtung zur Qualitätsprüfung von in einer Formgebungsmaschine hergestellten Formteilen 2 ermöglicht deren automatische Formprüfung durch deren Abtastung mittels eines längs eines geeignet gewählten Meßweges 5 geführten optischen Triangulationssensors, wobei aus dem bei der Bewegung des Triangulationssensors längs des Abtastweges 5 erhaltenen Lagekoordinatenwerten der Oberfläche des Formteils 2 Istmaßgrößen gebildet werden, die mit den für die vorgegebene Sollform festgelegten Sollmaßgrößen verglichen werden und aufgrund des Vergleichsergebnisses die Qualität des Formteils 2 bewertet wird.

## Beschreibung

Die Erfindung bezieht sich auf ein Verfahren zur Qualitätsprüfung von in einer Formgebungsmaschine, insbesondere einer Formpresse für körnige Massen, nach einer vorgegebenen Sollform hergestellten Formteilen, bei dem mindestens eine Istmaßgröße der Istform des Formteils mit der entsprechenden Sollmaßgröße der Sollform verglichen und daraus die Qualität des Formteils bewertet wird.

Ferner bezieht sich die Erfindung auf eine Vorrichtung zur Qualitätsprüfung von in einer Formgebungsmaschine, insbesondere einer Formpresse für körnige Massen, nach einer vorgegebenen Sollform hergestellten Formteilen, mit einer Einrichtung zum Bewerten der Qualität des Formteils durch Vergleichen mindestens einer Istmaßgröße der Istform des Formteils mit einer entsprechenden Sollmaßgröße der Sollform.

Durch eine derartige Qualitätsprüfung wird die Formgenauigkeit der hergestellten Formteile, das heißt die Genauigkeit der Übereinstimmung ihrer Istform mit der vorgegebenen Sollform überwacht. Insbesondere bei der Herstellung von Formteilen durch Trockenverpressen von Massen, die der Formpresse in einem rieselfähigen, körnigen Zustand zugeführt werden, besteht die Schwierigkeit, daß der Zustand der zugeführten Masse, beispielsweise hinsichtlich Korngröße oder Korngrößenverteilung, nicht immer gleichbleibend ist, wodurch sich Schwankungen der Formteile, insbesondere hinsichtlich ihres Gewichtes, ihrer Kornverteilung, ihrer Dichte, ihrer Dichteverteilung oder ihrer Abmessungen ergeben. Außerdem kommt es bei Formpressen vor, daß nach einiger Zeit Teile der zu verpressenden Masse an einem der Preßstempel kleben bleiben, was zu Störungen der Oberfläche des Formteils, sogenannten Anbackungen, führt.

Dem steht die Forderung der Verbraucher nach möglichst gleichbleibenden Eigenschaften der Formteile hinsichtlich ihrer Formgenauigkeit gegenüber. Letztere läßt sich bei durch ebene Flächen begrenzten Formteilen durch deren Linearabmessungen, nämlich Höhe, Breite, Länge, durch die zwischen den Flächen eingeschlossenen Winkel, durch den Kantenverlauf, durch die Rauhigkeit und die Abweichung der Flächen vom ebenen Verlauf (Bauchigkeit) erfassen. Bei Formteilen, die gekrümmte Begrenzungsflächen aufweisen, kommen weitere Bestimmungsgrößen wie Krümmungsradien und dergleichen hinzu. Außerdem werden insbesondere bei keramischen Formteilen eine gleichbleibende Dichte und vor allem eine gleichmäßige Korngrößenverteilung über den Körper des Formteils gefordert.

Der Erfindung liegt die Aufgabe zugrunde, ein Verfahren und eine Vorrichtung der eingangs genannten Art zu schaffen, die eine automatische, schnelle und zuverlässige Prüfung der Formteile auf Formgenauigkeit ermöglichen.

In verfahrensmäßiger Hinsicht wird diese Aufgabe erfindungsgemäß dadurch gelöst, daß das Formteil an zur Ermittlung der der Sollmaßgröße entsprechenden Istmaßgröße geeigneten Oberflächenstellen abgetastet und daraus ein die mit der durch ein Solldatensignal dargestellten Sollmaßgröße zu vergleichende Istmaßgröße darstellendes Istdatensignal gebildet wird.

Das erfindungsgemäße Verfahren macht sich den Umstand zunutze, daß die Formgenauigkeit des Formteils je nach den gestellten Genauigkeitsanforderungen durch geeignet gewählte Sollmaßgrößen der Sollform beschrieben werden kann, deren entsprechende Istmaßgrößen der Istform durch Abtastung geeigneter Oberflächenstellen des Formteils gebildet werden können. Wenn beispielsweise als Sollmaßgröße eine Längenabmessung des Formteils zwischen zwei Kanten des Formteils vorgegeben wird, genügt es, das Formteil in einer gewissen Umgebung der aufgrund der Sollform zu erwartenden Lage dieser Kanten abzutasten um dadurch die Istlage der Kante zu erfassen und aus dem Abstand dieser erfaßten Istlagen die betreffende Istmaßgröße zu ermitteln. Wird als weiteres Beispiel eine Obergrenze für die mittlere Rauhigkeit der Oberfläche vorgegeben, so sind hinreichend viele Oberflächenstellen abzutasten, die Aufschluß über deren Rauhigkeitsprofil geben und die Bildung der mittleren Istrauhigkeit als Istmaßgröße ermöglichen. Durch den Vergleich des der Sollmaßgröße entsprechenden vorgegebenen Solldatensignals und des die Istmaßgröße darstellenden Istdatensignals kann sodann automatisch die Bewertung der Qualität des Formteils erfolgen.

In einer bevorzugten Ausführungsform des erfindungsgemäßen Verfahrens ist vorgesehen, daß die Abtastung des Formteils durch mindestens einen längs eines in Abhängigkeit von der Sollform und der zu überprüfenden Istmaßgröße vorgebbaren Abtastwegs geführten Meßlichtstrahl erfolgt, aus dessen von dem Formteil zurückgestreuten Streulicht durch Triangulation ein Lagekoordinatenwert der rückstreuenden Oberflächenstelle des Formteils in der Richtung des Meßlichtstrahls gewonnen wird, der zusammen mit den Lagekoordinatenwerten des Meßlichtstrahls auf dem Abtastweg die räumliche Lage dieser Oberflächenstelle vollständig bestimmt.

Durch die Verwendung des Meßlichtstrahls erfolgt die Abtastung des Formteils berührungsfrei. Darüber hinaus hat sich gezeigt, daß durch die auf Triangulation zwischen dem Meßlichtstrahl und dem zurückgesteuten Streulicht beruhende Abstandsmessung auch noch sehr kontrastarme Strukturen der Oberfläche des Formteils zuverlässig erfaßt werden können. Auch läßt sich der Meßlichtstrahl, der beispielsweise in Form eines Infrarotlaserstrahls vorliegen kann, auf einen sehr kleinen Strahlquerschnitt bündeln, so daß auch sehr feine Oberflächenstrukturen aufgelöst werden können. Die Triangulation liefert unmittelbar einen Abstandswert der rückstreuenden Oberflächenstelle des Formteils in der Richtung des eingestrahlten Meßlichtstrahls. Der hierdurch erhaltene Lagekoordinatenwert der rückstreuenden Oberflächenstelle liefert sodann zusammen mit den den Strahlengang des Meßlichtstrahls beschreibenden Lagekoordinatenwerten eine vollständige Information über die räumliche Lage der gerade abgetasteten Oberflächenstelle. Hieraus kann also der genaue Oberflächenverlauf des Formteils an allen vom Meßlichtstrahl auf seinem Abtastweg überstrichenen Oberflächenstellen unmittelbar erschlossen und daraus die Istmaßgröße gebildet werden.

Häufig ist die Sollform der Formteile von regelmäßigen Flächenstücken, beispielsweise ebenen Flächenstücken, Zylindermantelstücken und dergleichen, begrenzt, wobei diese Flächenstücke an mindestens einer Kante aneinander angrenzen und die Flächenstücke an der Kante unter einem von Null verschiedenen Winkel zueinander ausgerichtet sind. In diesem Fall ist vorzugsweise vorgesehen, daß der Meßlichtstrahl auf seinem Abtastweg quer über die Kante hinweggeführt wird. Durch die Triangulation kann die bei jeder Kantenüberquerung des Meßlichtstrahls auftretende Abstandsänderung längs des Meßlichtstrahls sehr empfindlich erfaßt werden, wodurch die Lage der Kante sehr genau bestimmt werden kann. Die Anzahl der Meßpunkte, an denen der Meßlichtstrahl die Kante überquert, wird durch geeignete Wahl des Abtastweges in Abhängigkeit vom Kantenverlauf der Sollform und der gewünschten Prüfgenauigkeit gewählt. Ist beispielsweise der durch die Sollform vorgegebene Kantenverlauf geradlinig, so wird der Meßlichtstrahl an mehreren Stellen in zueinander parallelen Abtastbewegungen über die Kante hinweggeführt. Bei einem kreisbogenförmigen Verlauf einer Kante bietet es sich dagegen an, den Meßlichtstrahl in radialer Richtung über die Kante hinwegzuführen.

Die durch die Abtastung gelieferten räumlichen Lagen der Oberflächenstellen könnten zwar unmittelbar als Istmaßgrößen zum Vergleich mit den entsprechenden Sollmaßgrößen herangezogen werden. Häufig ist es jedoch zweckmäßig, aus den gesamten oder Teilmengen der ermittelten räumlichen Lagen Istmaßgrößen abzuleiten, die einen einfachen Vergleich mit entsprechenden Sollmaßgrößen ermöglichen. In dieser Hinsicht ist in einer vorteilhaften Ausführungsform des Verfahrens vorgesehen, daß für eine Anzahl von die räumliche Lage von Oberflächenelementen bestimmenden Werten eine bestangepaßte Ausgleichskurve bestimmt und als Istmaßgröße zum Vergleich mit der durch die entsprechende Sollkurve der Sollform bestimmten Sollmaßgröße verwendet wird. Die solchermaßen ermittelte Ausgleichskurve, unter der hier auch eine Ausgleichsfläche verstanden wird, ermöglicht einen besonders anschaulichen Vergleich mit der entsprechenden Sollkurve oder Sollfläche. Insbesondere kann aus der Abweichung zwischen Ist- und Sollkurve beziehungsweise -fläche leicht ein Maß für ausgedehnte Ausbauchungen oder Eindellungen gegenüber der Sollform definiert werden. Auch läßt sich die Oberflächenrauhigkeit in Bezug auf die Ausgleichskurve beziehungsweise Ausgleichsfläche bestimmen, indem die Abweichungen der einzelnen Lagewerte von der Ausgleichskurve beziehungsweise -fläche betrachtet werden.

In vorrichtungsmäßiger Hinsicht wird die der Erfindung zugrundeliegende Aufgabe mit einer Vorrichtung der eingangs genannten Art dadurch gelöst, daß die Bewertungseinrichtung eine ein die Sollmaßgröße darstellendes Solldatensignal liefernde Einrichtung und eine zur Abtastung des Formteils und zur Lieferung eines die der Sollmaßgröße entsprechende Istmaßgröße darstellenden Istdatensignals dienende Einrichtung aufweist.

Die erfindungsgemäße Vorrichtung wird im Einklang mit der entsprechenden Weiterbildung des erfindungsgemäßen Verfahrens vorteilhaft derart ausgebildet, daß die Abtasteinrichtung mindestens einen längs eines in Abhängigkeit von der Sollform und der zu überprüfenden Istmaßgröße vorgebbaren Abtastweges verfahrbaren Triangulationssensor aufweist, der aus dem beim Auftreffen seines Meßlichtstrahls auf das Formteil zurückgestreuten Streulicht durch Triangulation einen Lagekoordinatenwert bezüglich des Triangulationssensors in der Richtung des Meßlichtstrahls bildet, sowie eine Einrichtung zur Lieferung der Lagekoordinatenwerte des Triangulationssensors bei seiner Bewegung längs des Abtastweges.

Eine weitere zweckmäßige Ausgestaltung besteht darin, daß die Abtasteinrichtung einen im Meßlichtstrahl angeordneten Umlenkspiegel aufweist. Durch den Umlenkspiegel kann der Meßlichtstrahl ohne weiteren Aufwand auch auf solche Oberflächenbereiche des Formteils gerichtet werden, die sonst eine kompliziertere Gestaltung des Abtastweges fordern würden. Wenn beispielsweise der Triangulationssensor in einer horizontalen Ebene längs zueinander orthogonalen Koordinatenachsen geführt ist, können vertikale oder nahezu vertikale Oberflächenbereiche des Formteils nicht gut abgetastet werden, wogegen die Meßlichtstrahlumlenkung mittels des Umlenkspiegels Abhilfe schafft.

Gemäß einem weiteren Gedanken der Erfindung ist auch vorgesehen, daß der Umlenkspiegel als Drehspiegel ausgebildet ist. Hierdurch wird der Meßlichtstrahl bei im übrigen feststehender Abtasteinrichtung mit einer der Winkelfrequenz des Drehspiegels entsprechenden Winkelgeschwindigkeit über die Oberfläche des Formteils hinweggeführt, was sich insbesondere zur Abtastung gekrümmter Oberflächenbereiche eignet.

Auch erweist sich eine Ausführungsform als äußerst wirkungsvoll, bei der die Abtasteinrichtung eine im Meßlichtstrahl angeordnete, drehbare, planparallele optische Platte aufweist. Wegen der Brechung des Meßlichtstrahls beim Eintritt in die planparallele optische Platte und der dazu komplementären Brechung beim Austritt wird der austretende Meßlichtstrahl in Abhängigkeit vom Drehwinkel der optischen Platte gegenüber dem einfallenden Meßlichtstrahl parallel verschoben, so daß bei im übrigen feststehender Abtasteinrichtung der Meßlichtstrahl in Abhängigkeit von der Winkelfrequenz der optischen Platte hin- und herverschoben wird und dadurch eine sehr schnelle Abtastung von Kanten oder Rissen in der Oberfläche ermöglicht.

Eine weitere vorteilhafte Ausführungsform zeichnet sich dadurch aus, daß die Abtasteinrichtung ein im Meßlichtstrahl angeordnetes optisches Drehpolygon mit mindestens zwei planparallelen Flächen und mindestens einer weiteren verspiegelten Fläche aufweist. In den Drehstellungen des Drehpolygons, in denen der Meßlichtstrahl an der einen der beiden planparallelen Flächen in das Drehpolygon eintritt und an der gegenüberliegenden planparallelen Fläche austritt, führt also der austretende Meßlichtstrahl eine lineare Hin- und Herbewegung aus, während in den Drehstellungen, in denen er auf die verspiegelte Fläche auftrifft, der Meßlichtstrahl mit der Winkelgeschwindigkeit des Drehpolygons umlaufend abgelenkt wird. Bei im übrigen feststehender Abtasteinrichtung werden also durch die bloße Drehung des Drehpolygons sowohl eine hin- und hergehende als auch eine umlaufende Abtastbewegung des Meßlichtstrahls herbeigeführt.

Im Rahmen der Erfindung ist auch vorgesehen, daß der Abtasteinrichtung eine Transporteinrichtung zugeordnet ist, durch die die Formteile in eine vorgegebene Relativlage zu dem Abtastweg gebracht werden. Hierdurch wird die Auswertung erheblich vereinfacht, da durch die Kenntnis der Relativlage des Formteils dessen körpereigenes Koordinatensystem in vorgegebener Beziehung zum Koordinatensystem des Abtastweges liegt. Anderenfalls muß die Relativlage des Formteils zum Abtastweg erst durch den Meßvorgang erfaßt und ermittelt werden, was einen höheren Aufwand nach sich zieht.

Vor allem bei der Herstellung von Formteilen aus keramischem Material haftet den Formteilen oft loses Material an, das beim Transport der Formteile durch die Prüfvorrichtung zu Verschmutzungen führt. Um hiervon die Abtasteinrichtung frei zu halten, ist es zweckmäßig, daß sich der Abtastweg des Triangulationssensors oberhalb und/oder seitlich der in der vorgegebenen Relativlage positionierten Formteile erstreckt und die Unterseite der Formteile erfassende potentiometrische Berührungsabtaster vorgesehen sind. Die an der Unterseite der Formteile angreifenden potentiometrischen Berührungsabtaster sind gegen herabfallendes staubförmiges oder körniges Material weniger empfindlich.

Im Rahmen der Erfindung ist auch vorgesehen, daß der Transporteinrichtung eine Abhebeeinrichtung zugeordnet ist, mit der die Formteile an einigen Angriffstellen erfaßbar und in ihre vorgegebene Relativlage von der Transporteinrichtung abhebbar sind. Durch die Abhebeeinrichtung kann die Relativlage des Formteils in Bezug auf die Abtasteinrichtung sehr genau eingestellt werden und es erübrigen sich entsprechende Genauigkeitsanforderungen an die Transporteinrichtung. Beispielsweise kann die Transporteinrichtung als Riemen- oder Kettenförderband ausgebildet sein und die Abhebeeinrichtung die Ketten- oder Riemen kammartig durchgreifende Abhebestifte aufweisen, durch deren vertikale Stellung das Formteil von der Transporteinrichtung abgehoben und genau positioniert wird. Nach der Durchführung des Prüfvorgangs werden die Abhebestifte wieder abgesenkt und das Formteil dadurch an die Transporteinrichtung zur Abförderung übergeben.

In diesem Zusammenhang ist erfindungsgemäß auch vorgesehen, daß die Abhebeeinrichtung mit einer Wiegeeinrichtung gekoppelt ist. Hierdurch kann während des Prüfvorgangs auch das Gewicht des Formteils bestimmt sowie in Kenntnis des durch die Abtastung erfaßten Istvolumens die Istdichte des Formteils berechnet werden. Gleichzeitig mit der Formprüfung kann dadurch festgestellt werden, ob die Dichte von Formteil zu Formteil gleichbleibend ist. Selbst Dichteschwankungen innerhalb jedes Formteils können dann erfaßt werden, wenn die Wiegeeinrichtung mehr als eine Wiegezelle aufweist und dadurch in der Lage ist, die Masseverteilung über das Volumen des Formteils zu erfassen.

Gemäß einem weiteren Gesichtspunkt wird die erfindungsgemäße Vorrichtung derart ausgestaltet, daß die Bewertungseinrichtung eine Speichereinrichtung für die Sollform und ihr zugeordnete Toleranzabweichungen mindestens einer ihrer Sollmaßgrößen sowie den ihr zugeordneten Abtastweg festlegende Daten aufweist. Durch diese Maßnahme lassen sich eine oder mehrere Sollformen nebst zugeordneten Toleranzabweichungen vorprogrammieren. Beispielsweise kann die Sollform von keilförmigen Feuerfeststeinen und die Sollform abgerundeter Pfannensteine nebst anderen Sollformen abgespeichert werden. Die Vorrichtung steht dann wahlweise zur Prüfung aller dieser Sollformen zur Verfügung.

In diesem Zusammenhang ist es besonders zweckmäßig, wenn die Bewertungseinrichtung eine Sichtanzeigeeinrichtung zur wahlweisen Anzeige der für jede Sollform abgespeicherten Daten aufweist. Der Benutzer hat dadurch jederzeit Überblick über die verfügbaren und gerade gewählten Sollformeinstellungen der Vorrichtung.

Diese Übersichtlichkeit und Leichtigkeit der Bedienung wird weiter dadurch erhöht, daß in einer vorteilhaften Weiterbildung der durch die abgespeicherten Daten festgelegte Abtastweg auf der Sichtanzeigeeinrichtung graphisch anzeigbar ist. Der Benutzer kann sich dadurch visuell davon unterrichten, wie die Formteile durch das gerade gewählte Sollformprogramm abgetastet werden.

Weiterhin kann vorgesehen sein, daß die Bewertungseinrichtung eine Eingabeeinrichtung aufweist, von der die Speichereinrichtung zum Aufruf und/oder zur Änderung der abgespeicherten Daten ansteuerbar ist. Hierdurch können insbesondere die abgespeicherten Sollformen geändert und die Vorrichtung jederzeit an die jeweiligen Produktionsgegebenheiten angepaßt werden. Diese Eingabe der Sollformdaten kann auch in der Form eines Lernlaufs geschehen, in dem ein Modellformteil längs eines bestimmten Meßweges abgetastet und die dabei gewonnenen Daten eingespeichert werden.

Zweckmäßig ist auch die Ausbildung der erfindungsgemäßen Vorrichtung derart, daß in der Bewertungseinrichtung aus dem Ergebnis des Vergleichs zwischen Istmaßgröße und Sollmaßgröße ein die Qualität des Formteils darstellendes Bewertungssignal gebildet wird. Dieses Bewertungssignal kann beispielsweise anzeigen, ob die ermittelten Istmaßgrößen des Formteils gegenüber den Sollmaßgrößen eine vorgegebene Toleranzschwelle einhalten. Auch kann es eine logische Information enthalten, die beispielsweise eine Entscheidung über Brauchbarkeit oder Unbrauchbarkeit des Formteils bedeutet.

In diesem Zusammenhang ist es sehr zweckmäßig, daß das Bewertungssignal auf einer Sichtanzeige angezeigt wird. Dies kann beispielsweise dadurch geschehen, daß das Bewertungssignal zusammen mit den Daten der Sollform und den Toleranzabweichungen in übersichtlich gestalteten Bildschirmmasken wiedergegeben wird. Natürlich können die Informationsinhalte dieser Bildschirmmasken auch protokolliert werden, wodurch für jedes geprüfte Formteil eine vollständige Aufzeichnung erstellt und ausgedruckt oder abgespeichert werden kann.

Schließlich ist es gemäß einem anderen Aspekt der Erfindung auch vorgesehen, daß ein das Vergleichsergebnis darstellendes Signal als Steuersignal für Betriebsparameter der die Formteile herstellenden Formgebungsmaschine abnehmbar ist. Durch diese Rückkopplung des Bewertungssignals zu der die Formteile herstellenden Formgebungsmaschine ergibt sich die Möglichkeit, bei der Herstellung von Qualitätsmängeln sofort gegensteuernd in den Betriebsablauf der Formgebungsmaschine einzugreifen. Beispielsweise lassen sich bei Formpressen gewisse Qualitätsstörungen durch Beeinflussung der Materialzuführung und des Füllvorgangs für die Form beheben.

Weitere Merkmale, Einzelheiten und Vorteile der Erfindung ergeben sich aus der folgenden Beschreibung und der Zeichnung, auf die hinsichtlich einer erfindungswesentlichen Offenbarung aller im Text nicht erwähnten Einzelheiten ausdrücklich hingewiesen wird. Hierin zeigen:
- Fig. 1a: eine Vorrichtung zur Qualitätsprüfung in schematischer Seitenansicht quer zur Transportrichtung zu prüfender Formteile,
- Fig. 1b: die in Fig. 1a dargestellte Vorrichtung in Transportrichtung gesehen,
- Fig. 2: eine schematische Darstellung eines Formteils mit zu prüfenden Abmessungen und dem bei der Prüfung durchlaufenen Abtastweg eines Triangulationssensors,
- Fig. 3: eine beispielhafte Darstellung verschiedener Formabweichungen des Formteils,
- Fig. 4: ein Beispiel für von dem Triangulationssensor gelieferte Meßwerte und deren Auswertung.

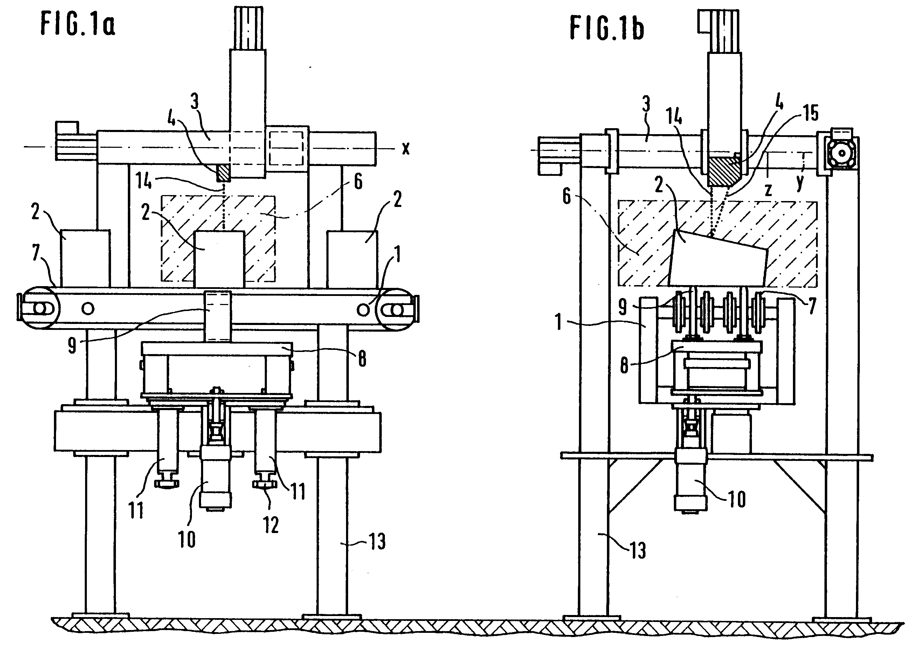

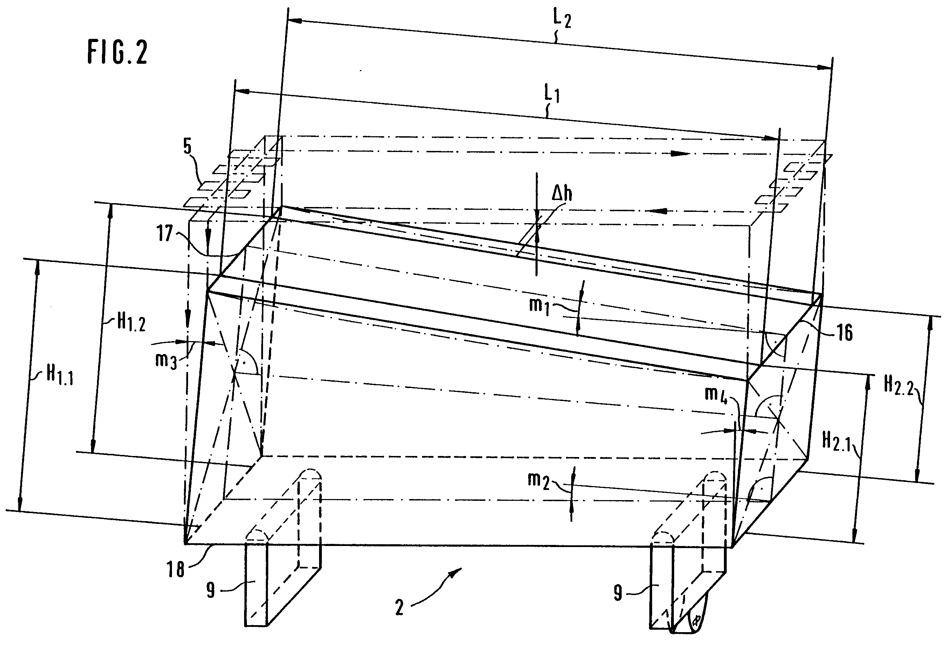

Eine in Fig. 1a und 1b in zueinander orthogonalen Seitenansichten dargestellte Vorrichtung zur Qualitätsprüfung weist in einem vertikalen Abstand oberhalb einer Transporteinrichtung 1 für zu prüfende Formteile 2 einen Kreuztisch 3 auf, an dem ein Triangulationssensor 4 längs zueinander orthogonalen horizontalen Koordinatenachsen, von denen die Koordinatenachse x in der Zeichnungsebene von Fig. 1a und die Koordinatenachse y in der Zeichnungsebene von Fig. 1b liegt, verfahrbar ist. Durch geeignete Steuerung seiner Bewegung längs der beiden Koordinatenachsen x und y kann der Triangulationssensor 4 längs vorgegebener Abtastwege 5 verfahren werden, von denen ein Beispiel in Fig. 2 dargestellt ist. Dem jeweiligen Abtastweg 5 entspricht also ein von dem Triangulationssensor 4 erfaßbarer Insektionsbereich 6, in dem die Formteile 2 einer Formprüfung unterzogen werden können.

In dem dargestellten Ausführungsbeispiel ist die Transporteinrichtung 1 als Taktband mit einer Anzahl in einem horizontalen Abstand zueinander angeordneter, umlaufender Transportriemen 7 ausgebildet, auf denen die Formteile 2 aufliegen und dadurch in eine vorgegebene Relativlage zu dem Abtastweg 5 des Triangulationssensors 4 transportiert werden. Ein unterhalb der Transportriemen 7 angeordneter Hubtisch 8 weist kammartig zwischen den Transportriemen 7 angeordnete, vertikale Stützzähne 9 auf, die im abgesenkten Zustand des Hubtischs 8 unterhalb der Transportebene der Transportriemen 7 liegen, jedoch im angehobenen Zustand des Hubtisches 8 über die Transportebene vertikal nach oben hinausragen und dadurch das darüber befindliche Formteil 2 durch Angriff an dessen Unterseite von den Transportriemen 7 abheben. Der Hubtisch 8 mit den Stützzähnen 9 dient somit als Abhebeeinrichtung, mit der die vertikale Relativlage der Formteile 2 in Bezug auf den Triangulationssensor 4 genau festlegbar ist. Der Höhenverstellung des Hubtisches 8 zwischen der angehobenen und der abgesenkten Stellung dient eine Zylinderkolbeneinrichtung 10 mit parallel zur Kolbenbewegung wirkenden Führungen 11, die mit einer Hubbegrenzung 12 versehen sind. Die Abhebeeinrichtung 8, 9 ist an einem Maschinengestell 13 abgestützt, das auch den Kreuztisch 3 trägt.

Wie in Fig. 1b angedeutet ist, sendet der Triangulationssensor 4 einen Meßlichtstrahl 14, beispielsweise einen Infrarotlaserstrahl, aus, dessen von der Oberfläche des Formteils 2 zurückgestreutes Streulicht 15 durch eine geeignete Optik des Triangulationssensors 4 erfaßt wird. Aus dem Meßlichtstrahl 14 und dem von der Optik des Triangulationssensors 4 erfaßten Streulicht 15 wird durch das wohlbekannte Triangulationsverfahren der Lagekoordinatenwert z der rückstreuenden Oberflächenstelle des Formteils 2 berechnet. Zusammen mit den Lagekoordinatenwerten x und y des Triangulationssensors 4 bei seiner Bewegung längs des Abtastweges 5 ist auf diese Weise die räumliche Lage jeder abgetasteten Oberflächenstelle des Formteils 2 bekannt.

Bei dem in Fig. 2 dargestellten, auf den Stützzähnen 9 ruhenden Formteil 2 handelt es sich beispielsweise um einen keramischen Feuerfeststein, dessen Sollform einem Keilstumpf entspricht. Diese Sollform läßt sich beispielsweise durch die Länge L in der Richtung der keilförmig konvergierenden Kanten, die Höhen H₁ und H₂ der größeren und der kleineren Keilbasis sowie die Winkelabweichungen m der Keilflächen vom rechten Winkel beschreiben. Zur Überprüfung der gegenüber der solchermaßen definierten Sollform vorliegenden Istform kann der Triangulationssensor 4 beispielsweise längs des in Fig. 2 dargestellten Abtastweges 5 geführt werden. Hierbei wird der Meßlichtstrahl 14 mehrere Male quer über die die zu erfassenden Abmessungen festlegenden Kanten 16, 17, 18 des Formteils 2 hinweggeführt, wobei die räumliche Lage der betreffenden Kante 16, 17 beziehungsweise 18 sehr genau aus der plötzlichen Änderung des von dem Triangulationssensor 4 erfaßten Koordinatenwertes z in der Richtung des Meßlichtstrahl 14 bei dessen Überschreiten der betreffenden Kante erkannt wird. Bei jeder Überschreitung einer der Kanten 16, 17 beziehungsweise 18 wird somit ein Punkt dieser Kante erfaßt und dadurch der Verlauf dieser Kante 16, 17 beziehungsweise 18 mit der jeweils erwünschten Genauigkeit bestimmt. Durch Differenzbildung zwischen den Istlagen der Kanten 17 und 16 werden somit die mit der Sollänge L zu vergleichenden Istlängen L₁, L₂ und so weiter gebildet. Auf gleiche Weise liefert die Differenzbildung zwischen der Lage der Kanten 17 und 18 die mit der Sollhöhe H zu vergleichenden Isthöhen H_{1.1} und H_{1.2}. Auch kann aus dem Lageunterschied der Kanten 17 und 18 der Winkel m₃ bestimmt werden. Entsprechendes gilt für die Winkel m₁ und m₂ unter Berücksichtigung der Lageunterschiede zwischen den Kanten 16 und 17.

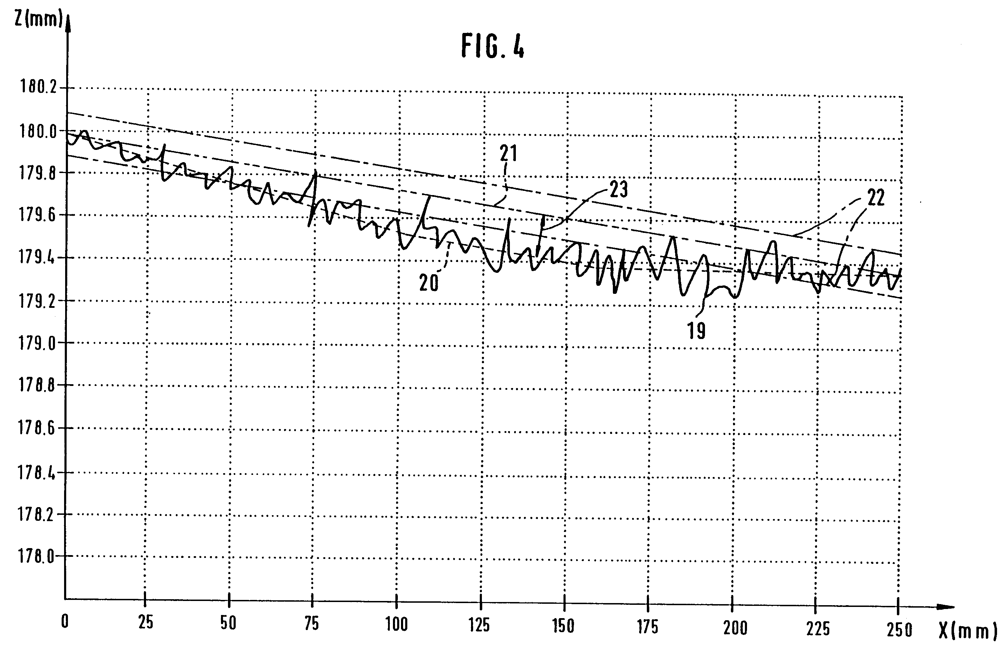

Auch die Eigenschaften und Verläufe der zwischen den Kanten 16, 17 beziehungsweise 18 begrenzten Oberflächenbereiche des Formkörpers 2 können durch geeignete Wahl des Abtastweges 5 mit jeder gewünschten Genauigkeit bestimmt werden. In Fig. 4 ist beispielhaft der von dem Triangulationssensor 4 gelieferte z-Koordinatenwert beim Überstreichen der dem Triangulationssensor 4 zugewandten oberen Keilfläche des Formteils 2 in der Richtung der x-Koordinatenachse des Triangulationssensors 4, die in Fig. 2 parallel zur Zeichnungsebene liegt, dargestellt. Das Bezugszeichen 19 bezeichnet den Verlauf der durch die Triangulation erhaltenen Meßwerte der z-Koordinate, welche die Istwerte für das geprüfte Formteil darstellen. Mittels einer in einer Bewertungseinrichtung der Vorrichtung vorgesehenen Recheneinrichtung wird durch diese Meßwerte 19 eine bestangepaßte Ausgleichskurve 20, beispielsweise in Form eines Anpassungspolygons, gelegt. Diese Ausgleichskurve 20 ermöglicht einen Vergleich mit der durch die Sollform vorgegebenen Sollgeraden 21. Der den Verlauf der Sollform wiedergebenden Sollgeraden kann ein Band von Toleranzwerten 22 zugeordnet werden, wobei der Vergleich zwischen Istform und Sollform so lange noch als Übereinstimmung bewertet werden kann, als die Meßwerte 19 innerhalb des Toleranzbandes liegen. In Fig. 4 tritt die Ausgleichskurve 20 deutlich aus dem Toleranzband 22 heraus. In diesem Fall ist die Abweichung als eine Bauchigkeit des geprüften Oberflächenbereichs zu bewerten. Als Maß für die maximale Bauchigkeit 23 kann beispielsweise der maximale Abstand zwischen der Sollgeraden 21 und der Ausgleichskurve 20 definiert werden. Ersichtlich lassen sich aus den Meßwerten 19 auch weitere Istmaßgrößen zum Vergleich mit entsprechenden Sollmaßgrößen bilden, beispielsweise die mittlere Oberflächenrauhigkeit.

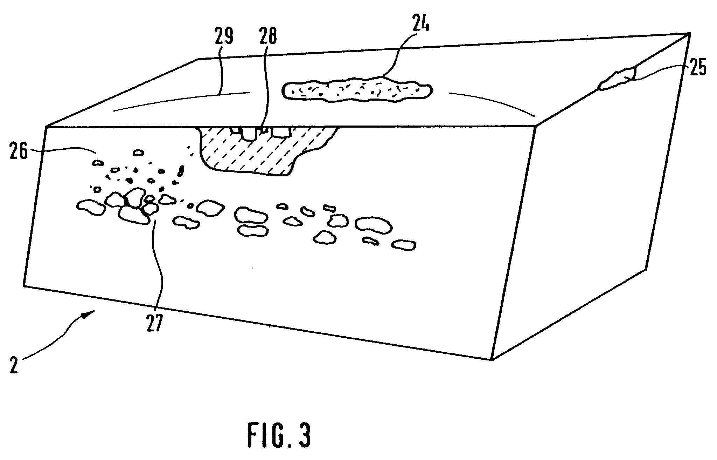

Einige weitere Beispiele für derartige erfaßbare Oberflächen- und Kantendefekte sind in Fig. 3 veranschaulicht. Hier weist das durch einen keramischen Feuerfeststein mit Keilstumpfform gebildete Formteil 2 an seiner nach oben weisenden Keilfläche einen Defekt 24 auf, der durch Anbackungen von Formmasse an der Form der Formpresse hervorgerufen ist. Ferner tritt an der die obere Keilfläche und die größere Basisfläche verbindenden Kante ein Kantenbruch 25 auf. An der in Fig. 3 zum Betrachter weisenden Seitenfläche des Formteils 2 sind gegeneinander abgegrenzte Zonen 26 besonders feinen Materials und Zonen 27 groben Materials ausgebildet. Ein Oberflächenbereich 28 körniger Struktur ist im Bereich der in Fig. 3 zum Betrachter weisenden oberen Keilkante sichtbar. Schließlich ist durch den mit dem Bezugszeichen 29 bezeichneten Linienverlauf eine vorstehend anhand von Fig. 4 erörterte Bauchigkeit der oberen Keilfläche angedeutet. In Fig. 2 ist eine derartige Bauchigkeit mit Δh bezeichnet.

Der in Fig. 2 dargestellte Abtastweg 5, bei dem der Triangulationssensor 4 lediglich längs der durch den Kreuztisch 3 festgelegten Koordinatenachsen x und y horizontal oberhalb dem Formteil 2 verschoben wird, hat zwar den Vorteil, daß eine Verschmutzung des Triangulationssensors 4 durch an dem Formteil 2 anhaftendes und bei der Prüfung herabfallendes loses Material ausgeschlossen ist. Doch ist dabei eine unmittelbare Prüfung der dem Meßweg 5 abgewandten und auf den Stützzähnen 9 aufliegenden Unterseite des Formteils 2 nicht möglich. Um auch diese Unterseite vollständig erfassen zu können, könnten im Inspektionsbereich 6 zwischen den Transportriemen 7 und den Stützzähnen 9 potentiometrische Berührungsabtaster (nicht dargestellt) angeordnet sein, die abtastend an der Unterseite angreifen und dadurch die Bildung eines die gewünschte Istmaßgröße der Unterseite darstellenden Istdatensignals ermöglichen. Diese potentiometrischen Berührungsabtaster zeichnen sich durch große Robustheit aus und sind somit gegen Verschmutzungen durch herabfallendes loses Material wenig anfällig.

Der Triangulationssensor 4 könnte auch einen im Meßlichtstrahl 14 angeordneten Umlenkspiegel (nicht dargestellt) aufweisen. Hierdurch können auch solche Oberflächenbereiche des Formteils 2 erfaßt werden, die nicht unmittelbar der Richtung des ursprünglich ausgesendeten Meßlichtstrahls 14 zugewandt sind. Auch könnte der Umlenkspiegel als Drehspiegel ausgebildet sein, wodurch ein in der Drehebene umlaufender Abtaststrahl hoher Abtastgeschwindigkeit erzeugt werden kann. Eine weitere Möglichkeit besteht darin, im Meßlichtstrahl 14 eine drehbare planparallele optische Platte (nicht dargestellt) anzuordnen. Wegen der zweifachen Brechung des Meßlichtstrahls 14 beim Eintritt in die und beim Austritt aus der optischen Platte ist dann der austretende Strahl gegenüber dem eintretenden Meßlichtstrahl 14 um eine der Drehwinkelstellung der Platte entsprechende Strecke parallel versetzt, so daß durch die Drehung der Platte ein schnell hin- und herpendelnder Abtaststrahl gewonnen werden kann, durch den insbesondere Kantenbereiche sehr schnell erfaßt werden können.

Auch können die Funktionen des Drehspiegels und der optischen Platte miteinander kombiniert werden, indem im Meßlichtstrahl 14 ein Drehpolygon angeordnet wird, das mindestens zwei zueinander planparallele Flächen und mindestens eine weitere, verspiegelte Fläche aufweist. Die beiden planparallelen Flächen wirken dann ebenso wie die vorstehend erläuterte optische Platte, während die verspiegelte Fläche die vorstehend erläuterte Wirkung des Drehspiegels liefert.

Der Hubtisch 8 kann derart mit einer Wiegeeinrichtung (nicht dargestellt) gekoppelt sein, daß in seinem angehobenen Zustand, in dem das Formteil 2 im Inspektionsbereich 6 auf den Stützzähnen 9 ruht, die von dem Formteil 2 ausgeübte Gewichtskraft auf die Wiegeeinrichtung übertragen wird, die dadurch ein dem Gewicht des Formteils 2 entsprechendes Signal liefert. Sofern die Wiegeeinrichtung mit mehreren Wägezellen versehen ist, können die von verschiedenen Stellen des Formteils 6 herrührenden Gewichtskraftanteile getrennt ermittelt und dadurch der Schwerpunkt des Formteils 2 bestimmt werden. Hieraus lassen sich Rückschlüsse auf die Dichteverteilung innerhalb des Formteils 2 ziehen.

Die vorstehende Beschreibung verdeutlicht, daß die beschriebene Vorrichtung und das ihrem Betrieb zugrundeliegende Verfahren darauf beruhen, gewünschte Istmaßgrößen der Istform der zu prüfenden Formteile 2 mit den entsprechenden Sollmaßgrößen ihrer Sollform zu vergleichen, wobei zur automatischen Durchführung dieses Vergleichs und der daraus folgenden Bewertung der Qualität des Formteils 2 der Sollmaßgröße und der Istmaßgröße entsprechende Solldatensignale und Istdatensignale verarbeitet werden. Zur Durchführung der damit verbundenen Signal- beziehungsweise Datenverarbeitungsvorgänge weist die hierfür vorgesehene Bewertungseinrichtung der Vorrichtung geeignete elektronische Komponenten auf, die in einem an dem Maschinengestell 13 angeordneten Gehäuse (nicht dargestellt) oder auch davon getrennt angeordnet sein können. Zu diesen elektronischen Komponenten gehört insbesondere eine Speichereinrichtung für Daten, welche die Sollform, ihre Sollmaßgrößen, die diesen Sollmaßgrößen zugeordneten Toleranzabweichungen und den für diese Sollform vorgesehenen Abtastweg festlegen. In dieser Speichereinrichtung kann eine ganze Anzahl solcher Datensätze für verschiedene Sollformen abgespeichert werden. Die für den jeweils zu prüfenden Formteiltyp zutreffende Sollform kann über eine Eingabeeinrichtung, beispielsweise in Form einer Tastatur, aufgerufen werden. Auch kann mit dieser Eingabetastatur ein Einstellmodus der Vorrichtung aufgerufen werden, in dem die den Sollformen zugeordneten Datensätze neu eingespeichert oder geändert werden können.

Auch ist die Bewertungseinrichtung mit einer Sichtanzeigeeinrichtung, beispielsweise einem Anzeigebildschirm, versehen, auf dem bei Aufruf die für jede Sollform abgespeicherten Datensätze oder auch die Sollform in grafischer Darstellung angezeigt werden. Insbesondere ist auch der durch diese Daten festgelegte Abtastweg auf der Sichtanzeigeeinrichtung grafisch anzeigbar.

Auf der Sichtanzeigeeinrichtung ist auch ein in der Bewertungseinrichtung aufgrund des Vergleichs zwischen Istmaßgröße und Sollmaßgröße gebildetes Bewertungssignal anzeigbar. Je nach Einhaltung oder Überschreitung der vorgegebenen Toleranzgrenzen kann dieses Bewertungssignal beispielsweise zwei logische Pegel annehmen, die in der Form des Klartextes "gut" oder "schlecht" angezeigt werden. Auch kann dieses Bewertungssignal dazu verwendet werden, die nach Durchführung der Qualitätsprüfung von der Transporteinrichtung 1 aus der Vorrichtung heraustransportierten Formteile 3 automatisch nach Qualitäten zu sortieren.

Schließlich kann ein das Vergleichsergebnis zwischen Ist- und Sollform darstellendes Signal zu der die Formteile 2 herstellenden Formgebungsmaschine zurückgeführt und dazu verwendet werden, die Betriebsparameter der Formgebungsmaschine derart zu beeinflussen, daß dort den festgestellten Abweichungen von der Sollform sofort gegengesteuert werden kann.

Die Abweichungen der Istmaßgrößen von den vorgegebenen Sollmaßgrößen können in einer Reihe nacheinander geprüfter Formteile nur statistisch schwanken oder auch eine gerichtete Annäherung an ihre vorgegebene Toleranzabweichung zeigen. Letzteres ist beispielsweise dann der Fall, wenn durch einen fortschreitenden Wandverschleiß der zur Herstellung der Formteile verwendeten Form die Fehler in der Istform nacheinander hergestellter Formteile entsprechend zunehmen. Durch eine in der Bewertungseinrichtung vorgesehene Trendbestimmungseinrichtung werden derartige gerichtete Fehler der Istmaßgrößen fortlaufend erfaßt und dadurch der Fehlertrend bestimmt. Aus dieser Trendbestimmung kann daher die fortschreitende Fehlerursache, beispielsweise der fortschreitende Wandverschleiß, erkannt und nötigenfalls die notwendige Gegenmaßnahme ergriffen werden.

### Verzeichnis der Bezugszeichen

- 1: Transporteinrichtung
- 2: Formteil
- 3: Kreuztisch
- 4: Triangulationssensor
- 5: Abtastweg
- 6: Inspektionsbereich
- 7: Transportriemen
- 8: Hubtisch
- 9: Stützzähne
- 10: Zylinder-Kolben-Einrichtung
- 11: Führungen
- 12: Hubbegrenzung
- 13: Maschinengestell
- 14: Meßlichtstrahl
- 15: Streulicht
- 16: Kante
- 17: Kante
- 18: Kante
- 19: Meßwerte
- 20: Ausgleichskurve
- 21: Sollgerade
- 22: Toleranzweite
- 23: maximale Bauchigkeit
- 24: Defekt durch Anbackung
- 25: Kantenbruch
- 26: Zone feinen Materials
- 27: Zone groben Materials
- 28: Oberflächenbereich körniger Struktur
- 29: Linienverlauf

## Patentansprüche

1. Verfahren zur Qualitätsprüfung von in einer Formgebungsmaschine, insbesondere einer Formpresse für körnige Massen, nach einer vorgegebenen Sollform hergestellten Formteilen, bei dem mindestens eine Istmaßgröße der Istform des Formteils mit der entsprechenden Sollmaßgröße der Sollform verglichen und daraus die Qualität des Formteils bewertet wird, dadurch gekennzeichnet, daß das Formteil an zur Ermittlung der der Sollmaßgröße entsprechenden Istmaßgröße geeigneten Oberflächenstellen abgetastet und daraus ein die mit der durch ein Solldatensignal dargestellten Sollmaßgröße zu vergleichende Istmaßgröße darstellendes Istdatensignal gebildet wird.

2. Verfahren nach Anspruch 1, dadurch gekennzeichnet, daß die Abtastung des Formteils durch mindestens einen längs eines in Abhängigkeit von der Sollform und der zu überprüfenden Istmaßgröße vorgebbaren Abtastwegs geführten Meßlichtstrahl erfolgt, aus dessen von dem Formteil zurückgestreuten Streulicht durch Triangulation ein Lagekoordinatenwert der rückstreuenden Oberflächenstelle des Formteils in der Richtung des Meßlichtstrahls gewonnen wird, der zusammen mit den Lagekoordinatenwerten des Meßlichtstrahls auf dem Abtastweg die räumliche Lage dieser Oberflächenstelle vollständig bestimmt.

3. Verfahren nach Anspruch 2, bei dem die Sollform von an mindestens einer Kante aneinander angrenzenden Flächenstücken begrenzt ist, die an der Kante unter einem von Null verschiedenen Winkel zueinander ausgerichtet sind, dadurch gekennzeichnet, daß der Meßlichtstrahl auf seinem Abtastweg quer über die Kante hinweggeführt wird.

4. Verfahren nach Anspruch 2 oder 3, dadurch gekennzeichnet, daß für eine Anzahl von die räumliche Lage von Oberflächenelementen bestimmenden Werten eine bestangepaßte Ausgleichskurve bestimmt und als Istmaßgröße zum Vergleich mit der durch die entsprechende Sollkurve der Sollform bestimmten Sollmaßgröße verwendet wird.

5. Vorrichtung zur Qualitätsprüfung von in einer Formgebungsmaschine, insbesondere einer Formpresse für körnige Massen, nach einer vorgegebenen Sollform hergestellten Formteilen (2), mit einer Einrichtung zum Bewerten der Qualität des Formteils (2) durch Vergleichen mindestens einer Istmaßgröße der Istform des Formteils (2) mit einer entsprechenden Sollmaßgröße der Sollform, dadurch gekennzeichnet, daß die Bewertungseinrichtung eine ein die Sollmaßgröße darstellendes Solldatensignal liefernde Einrichtung und eine zur Abtastung des Formteils (2) und zur Lieferung eines die der Sollmaßgröße entsprechende Istmaßgröße darstellenden Istdatensignals dienende Einrichtung aufweist.

6. Vorrichtung nach Anspruch 5, dadurch gekennzeichnet, daß die Abtasteinrichtung (4) mindestens einen längs eines in Abhängigkeit von der Sollform und der zu überprüfenden Istmaßgröße vorgebbaren Abtastweges (5) verfahrbaren Triangulationssensor (4) aufweist, der aus dem beim Auftreffen seines Meßlichtstrahls auf das Formteil (2) zurückgestreuten Streulicht durch Triangulation einen Lagekoordinatenwert (z) bezüglich des Triangulationssensors (4) in der Richtung des Meßlichtstrahls (14) bildet, sowie eine Einrichtung zur Lieferung der Lagekoordinatenwerte des Triangulationssensors (4) bei seiner Bewegung längs des Abtastweges.

7. Vorrichtung nach Anspruch 6, dadurch gekennzeichnet, daß die Abtasteinrichtung (4) einen im Meßlichtstrahl (14) angeordneten Umlenkspiegel aufweist.

8. Vorrichtung nach Anspruch 7, dadurch gekennzeichnet, daß der Umlenkspiegel als Drehspiegel ausgebildet ist.

9. Vorrichtung nach Anspruch 6, dadurch gekennzeichnet, daß die Abtasteinrichtung (4) eine im Meßlichtstrahl (14) angeordnete, drehbare, planparallele optische Platte aufweist.

10. Vorrichtung nach Anspruch 6, dadurch gekennzeichnet, daß die Abtasteinrichtung (4) ein im Meßlichtstrahl (14) angeordnetes optisches Drehpolygon mit mindestens zwei planparallelen Flächen und mindestens einer weiteren verspiegelten Fläche aufweist.

11. Vorrichtung nach einem der Ansprüche 6 bis 10, dadurch gekennzeichnet, daß der Abtasteinrichtung (4) eine Transporteinrichtung (1) zugeordnet ist, durch die die Formteile (2) in eine vorgegebene Relativlage zu dem Abtastweg (5) gebracht werden.

12. Vorrichtung nach Anspruch 11, dadurch gekennzeichnet, daß sich der Abtastweg (5) des Triangulationssensors (4) oberhalb und/oder seitlich der in der vorgegebenen Relativlage positionierten Formteile (2) erstreckt und die Unterseite der Formteile (2) erfassende potentiometrische Berührungsabtaster vorgesehen sind.

13. Vorrichtung nach Anspruch 11 oder 12, dadurch gekennzeichnet, daß der Transporteinrichtung (1) eine Abhebeeinrichtung (8, 9) zugeordnet ist, mit der die Formteile (2) an einigen Angriffstellen erfaßbar und in ihre vorgegebene Relativlage von der Transporteinrichtung (1) abhebbar sind.

14. Vorrichtung nach Anspruch 13, dadurch gekennzeichnet, daß die Abhebeeinrichtung mit einer Wiegeeinrichtung gekoppelt ist.

15. Vorrichtung nach einem der Ansprüche 6 bis 14, dadurch gekennzeichnet, daß die Bewertungseinrichtung eine Speichereinrichtung für die Sollform und ihr zugeordnete Toleranzabweichungen mindestens einer ihrer Sollmaßgrößen sowie den ihr zugeordneten Abtastweg (5) festlegende Daten aufweist.

16. Vorrichtung nach Anspruch 15, dadurch gekennzeichnet, daß die Bewertungseinrichtung eine Sichtanzeigeeinrichtung zur wahlweisen Anzeige der für jede Sollform abgespeicherten Daten aufweist.

17. Vorrichtung nach Anspruch 16, dadurch gekennzeichnet, daß der durch die abgespeicherten Daten festgelegte Abtastweg (5) auf der Sichtanzeigeeinrichtung graphisch anzeigbar ist.

18. Vorrichtung nach einem der Ansprüche 15 bis 17, dadurch gekennzeichnet, daß die Bewertungseinrichtung eine Eingabeeinrichtung aufweist, von der die Speichereinrichtung zum Aufruf und/oder zur Änderung der abgespeicherten Daten ansteuerbar ist.

19. Vorrichtung nach einem der Ansprüche 6 bis 18, dadurch gekennzeichnet, daß die Bewertungseinrichtung eine Recheneinrichtung zur Ermittlung einer bestangepaßten Ausgleichskurve (20) durch aus den Lagekoordinatenwerten (x,y) des Triangulationssensors (4) und dem Lagekoordinatenwert (z) in Richtung des Meßlichtstrahls (14) bestimmte Oberflächenkoordinaten der Istform als Istmaßgröße aufweist.

20. Vorrichtung nach einem der Ansprüche 5 bis 19, dadurch gekennzeichnet, daß in der Bewertungseinrichtung aus dem Ergebnis des Vergleichs zwischen Istmaßgröße und Sollmaßgröße ein die Qualität des Formteils darstellendes Bewertungssignal gebildet wird.

21. Vorrichtung nach Anspruch 20, dadurch gekennzeichnet, daß das Bewertungssignal auf einer Sichtanzeige angezeigt wird.

22. Vorrichtung nach Anspruch 20 oder 21, dadurch gekennzeichnet, daß ein das Vergleichsergebnis darstellendes Signal als Steuersignal für Betriebsparameter der die Formteile (2) herstellenden Formgebungsmaschine abnehmbar ist.

23. Vorrichtung nach einem der Ansprüche 14 bis 22, dadurch gekennzeichnet, daß die Bewertungseinrichtung eine Einrichtung zur Berechnung der Dichte des Formteils (2) aus dem von der Wiegeeinrichtung gelieferten Gewichtswert und dem Volumen der Sollform aufweist.

24. Vorrichtung nach einem der Ansprüche 14 bis 23, dadurch gekennzeichnet, daß die Wiegeeinrichtung mehrere Wiegezellen aufweist, von denen das Formteil (2) beim Wiegen an mehreren Stellen abgestützt wird, und die Bewertungseinrichtung eine Einrichtung zur Bestimmung des Schwerpunktes des Formteils (2) aus den von den Wiegezellen gelieferten Gewichtssignalen aufweist.

25. Vorrichtung nach einem der Ansprüche 15 bis 25, dadurch gekennzeichnet, daß die Bewertungseinrichtung eine Trendbestimmungseinrichtung aufweist, durch die das Auftreten einer gerichteten Annäherung der Istmaßgröße an ihre Toleranzabweichung in nacheinander geprüften Formteilen (2) erfaßbar ist.
